# EUROPÄISCHE PATENTSCHRIFT

(11) **EP 2 902 099 B1**
(45) Veröffentlichungstag und Bekanntmachung des Hinweises auf die Patenterteilung: **02.10.2019**
(21) Anmeldenummer: 15000179.0
(22) Anmeldetag: 22.01.2015
(51) Int. Cl.: B01F 15/00, B01L 3/00, B01F 13/00

(54) **PROBENVORBEREITUNGS- UND TESTSYSTEM**
Sample preparation and testing system
Système de test et de préparation d'échantillons

(30) Priorität: 01.02.2014 DE 102014001386
(43) Veröffentlichungstag der Anmeldung: 05.08.2015
(73) Patentinhaber: Dräger Safety AG & Co. KGaA, 23560 Lübeck (DE)
(72) Erfinder: Hoder, Matthias, 23558 Lübeck (DE); Mahn, Jessika, 23623 Ahrensbök (DE); Polzius, Rainer, 23566 Lübeck (DE); Wuske, Thomas, 23714 Malente (DE)
(74) Vertreter: Guthöhrlein, Gerhard

(56) Entgegenhaltungen:
- WO-A2-2007/016691
- DE-A1-102007 014 729
- DE-C- 44 822
- FR-A1- 2 843 011
- GB-A- 2 483 077
- US-A- 4 104 025
- US-A- 4 522 923

## Beschreibung

Die Erfindung betrifft ein im Folgenden mitunter auch nur kurz als Testvorrichtung bezeichnetes Probenvorbereitungs- und Testsystem zur schnellen Aufnahme, Bevorratung und Abgabe von Proben, insbesondere flüssigen Proben. Die Erfindung betrifft im Weiteren ein Verfahren zur Verwendung der Testvorrichtung.

In der Diagnostik stellt die Vorbereitung einer jeweiligen Probe einen essentiellen ersten Schritt dar, der auf die Präzision und Richtigkeit der Analyse einen entscheidenden Einfluss hat. Die Probenvorbereitung besteht typischerweise aus der Verdünnung einer flüssigen Probe mit einer Verdünnungsflüssigkeit und der Vermischung mit den für die Analyse notwendigen Reagenzien. Im Falle einer festen Probe wird diese mit Hilfe der Verdünnungsflüssigkeit extrahiert. Verdünnungs- und Extraktionsvorgänge werden in der Regel durch mechanische Agitation vermittelt, die im Falle von Laborgeräten durch elektromechanische Schüttler oder Rührwerke ausgeführt wird (The Immunoassay Handbook, 3rd ed., D. Wild, 2005) und im Falle von Schnelldiagnostiksystemen entweder eine intrinsische Funktion des Testsystems darstellt (z.B. bei immunchromatographischen Testsystemen) oder durch einen manuellen Schüttelprozess erreicht wird.

Aus der DE 199 09 891 ist eine diagnostische Vorrichtung bekannt, die einen immunochromatographischen Teststreifen und ein Probenahmesystem für Hausstaub in einem mikrofluidischen System vereinigt. Die Hausstaubprobe wird in einer porösen Probenahmespitze gesammelt, anschließend durch Auftropfen einer Verdünnungsflüssigkeit extrahiert und dem immunchromatographischen Teststreifen zugeführt. Extraktions- und Reagenzverdünnungsreaktionen stellen hier eine intrinsische Funktion des mikrofluidischen Systems dar. Noch nicht optimal bei diesem Verfahren ist die teilweise geringe Extraktionsgenauigkeit des Verfahrens.

Aus der US 7,713,475 geht ein diagnostisches Testsystem hervor, das verschiedene Reaktionskammern, Depots für Verdünnungsflüssigkeiten und Reagenzien sowie mehrere immunchromatographische Teststreifen inkorporiert. In Folge der Anwendung der Vorrichtung wird die flüssige Probe sowie trockene Reagenzien mit Verdünnungsflüssigkeit versetzt und vermischt. Die Schrift enthält keine Information über die Art des Vermischungsprozesses.

Aus der EP 2 139 601 A ist eine diagnostische Vorrichtung bekannt, die eine Mischkammer mit einem Depot für trockenes Reagenz in fluidischer Anbindung zu einem immunchromatographischen Teststreifen aufweist. Nach Einfüllen der flüssigen Probe wird das Reagenz durch manuelle Agitation mit der flüssigen Probe vermischt. Anschließend wird das Reaktionsgemisch durch Öffnung einer Fluidverbindung dem immunchromatographischen Teststreifen zugeführt. Aus der Schrift geht hervor, dass es sich bei dem Reagenz um Goldkonjugat handeln kann, das auf dem Boden der Mischkammer angeordnet ist und durch manuelles Schütteln der Mischkammer in Lösung gebracht wird. Die Schrift enthält keine Information darüber, wie der Schüttelvorgang zeitlich gesteuert wird.

Eine Aufgabe der vorliegenden Erfindung besteht darin, eine Testvorrichtung anzugeben, bei welcher der Anwender auf einfache Art eine notwendige oder hinreichende Dauer eines Schüttelvorgangs erkennen kann. Weiterhin besteht eine Aufgabe der Erfindung darin, eine besondere Ausführungsform einer Testvorrichtung sowie ein Verfahren zur Verwendung einer solchen Testvorrichtung anzugeben.

Diese Aufgabe wird erfindungsgemäß mit einer Testvorrichtung mit den Merkmalen des Anspruchs 1 gelöst. Dazu ist bei einer Testvorrichtung mit einem Mischbehälter ein im Inneren des Mischbehälters befindliches und als Schüttelindikator fungierendes Anzeigeelement vorgesehen, das im Verlauf des Schüttelvorgangs entfärbt wird und vollständig entfärbt ist, wenn eine Verdünnung
und/oder Extraktion der Probe vollständig oder in hinreichendem Umfang abgeschlossen ist und der Schüttelvorgang damit beendet werden kann.

Bei der Verwendung einer solchen Testvorrichtung wird der Mischbehälter mit einer in den Mischbehälter gegebenen Probe bis zur Entfärbung des Anzeigeelements geschüttelt.

Der Vorteil der Erfindung besteht darin, dass der Anwender anhand einer Farbveränderung eines im Mischbehälter befindlichen, porösen Anzeigeelements die notwendige oder hinreichende Dauer eines Schüttelvorgangs ermitteln kann. Auf diese Weise wird funktional sichergestellt, dass Verdünnungs- und Extraktionsvorgänge im Mischbehälter präzise und vollständig ablaufen, so dass eine hohe analytische Genauigkeit eines nachfolgenden Analyseverfahrens gewährleistet ist.

Bei der hier vorgeschlagenen Testvorrichtung ist vorgesehen, dass diese einen Probenehmer, einen Extraktor und einen Starter umfasst, dass der Probenehmer mit dem Extraktor und der Extraktor mit dem Starter zum Beispiel durch Zusammenstecken kombinierbar ist und dass durch Kombination des Probenehmers mit dem Extraktor ein als Schüttelreaktor fungierender und ein für einen Schüttelvorgang ausreichend dichter Mischbehälter entsteht. Die Testvorrichtung besteht damit aus wenigen, leicht zu verwendenden Einzelkomponenten, und der Mischbehälter entsteht durch Zusammenfügen zweier Einzelkomponenten.

Bei der EP 2 139 601 A wird die dortige Mischkammer mittels eines umklappbaren Deckels verschlossen. Die Mischkammer ergibt sich also, anders als bei der gegenständlichen Testvorrichtung, nicht durch eine Kombination eines Probenehmers mit einem weiteren Teil der Testvorrichtung. Bei der US 2006/127274 A fungiert als Mischbehälter ein becherartiger Behälter, der ebenfalls nicht mittels eines Probenehmers sondern mittels eines Deckels verschlossen wird. Aus der WO 2005/045408 ist eine Vorrichtung bekannt, bei der ein schwammartiger Probenehmer in eine erste nicht hermetisch dichte Kammer eingeführt und dabei ausgepresst wird. Gleichzeitig wird über einen verschiebbaren Dorn eine Reagenzampulle zerstört, so dass ein Gemenge aus Probe und Reagenz entsteht, das unmittelbar durch bodenständige Öffnungen in eine zweite Kammer tropft, in der weitere Trockenreagenzien durch die eindringende Flüssigkeit aufgelöst werden. Auch hier ergibt sich mit dem Einsetzen des Probenehmers kein dichter Mischbehälter. Die Kammer ist auch gar nicht zum Schütteln vorgesehen, denn aus dieser Kammer tropft das Gemisch in eine zweite Kammer die ebenfalls nicht für einen Schüttelvorgang ausreichend dicht ist, denn zum einen ist die zweite Kammer zur ersten Kammer offen und zum anderen weist die zweite Kammer Öffnungen zum Einführen von Teststreifen auf. Bei der DE 103 28 984 A1 und der FR 2 843 011 A1 wird ein Probenkollektor mit einem einer Probenahmespitze gegenüberliegenden offenen Ende in ein Sackloch einer dort als Pneumatikeinheit bezeichneten Komponente eingeführt. Dabei ergibt sich im Inneren des Probenkollektors ein Überdruck, welcher dafür bestimmt ist, Speichel aus dem Probenkollektor heraus und durch ein poröses Material eines Filtermischers hindurchzudrücken. Dafür wird der Probenkollektor mit der Probenahmespitze in den Filtermischer eingeführt und danach mittels der Pneumatikeinheit ein Überdruck im Inneren des Probenkollektors erzeugt.

Bei der Testvorrichtung mit Probenehmer, Extraktor und Starter ist in dem sich durch die Kombination von Probenehmer und Extraktor ergebenden Mischbehälter ein poröses Anzeigeelement der oben beschriebenen Art vorhanden. Ein solches Anzeigeelement ist im Mischbehälter vorhanden und die nachfolgende Beschreibung wird auch am Beispiel einer ein solches Anzeigeelement umfassenden Testvorrichtung mit Probenehmer, Extraktor und Starter fortgesetzt.

Bei der Testvorrichtung ist vorgesehen, dass der Probenehmer an einem Ende einen Probenahmekörper aufweist, dass der

Probenehmer mit dem Probenahmekörper in einen Tubus des Extraktors einführbar ist und bei Verwendung der Testvorrichtung eingeführt wird und dass beim Einführen des Probenehmers in den Extraktor im Inneren des so gebildeten Schüttelreaktors ein Überdruck entsteht. Der so erhaltene Überdruck ist beim Abziehen des Probegemisches aus dem Schüttelreaktor hilfreich.

Bei der Verwendung einer solchen Testvorrichtung wird mit dem Probenehmer eine Probe genommen und der Probenehmer anschließend mit dem Extraktor kombiniert, so dass der Probenehmer und der Extraktor zusammen einen Schüttelreaktor bilden. Anschließend wird der Schüttelreaktor bis zur Entfärbung des Anzeigeelements geschüttelt und ein dabei resultierendes Probengemisch kann aufgrund eines beim Zusammenfügen von Probenehmer und Extraktor erzeugten Überdrucks leicht aus dem Schüttelreaktor abfließen, wenn dieser bestimmungsgemäß geöffnet wird, zum Beispiel indem der Schüttelreaktor zur Auswertung des Probengemisches mit dem Starter kombiniert und in den Starter eingedrückt wird.

Vorteilhafte Ausgestaltungen der Erfindung sind Gegenstand der Unteransprüche.

Nachfolgend wird ein Ausführungsbeispiel der Erfindung anhand der Zeichnung näher erläutert. Einander entsprechende Gegenstände oder Elemente sind in allen Figuren mit den gleichen Bezugszeichen versehen.

Das oder jedes Ausführungsbeispiel ist nicht als Einschränkung der Erfindung zu verstehen. Vielmehr sind im Rahmen der vorliegenden Offenbarung Abänderungen und Modifikationen im Rahmen des Umfangs der Ansprüche möglich.

Es zeigen
- Figur 1: eine nicht erfindungsgemäße Testvorrichtung smit einem Anzeigeelement zur visuellen Kontrolle von flüssig-flüssig Vermischungs- oder flüssig-fest Extraktionsreaktionen,
- Figur 2: eine Testvorrichtung wie in Figur 1 mit einem ringförmigen Anzeigeelement,
- Figur 3A, 3B: eine Testvorrichtung wie in Figur 1 mit weiteren Details,
- Figur 4: eine erfindungsgemäße Ausführungsform einer Testvorrichtung gemäß Figur 2 mit einem Probenehmer, einem Extraktor und einem Starter,
- Figur 5: einen durch Kombination des Probenehmers mit dem Extraktor gebildeten Schüttelreaktor,
- Figur 6: den Probenehmer,
- Figur 7 bis 9: den Extraktor,
- Figur 10 und 11: den Starter,
- Figur 12: die Testvorrichtung gemäß Figur 4 im Längsschnitt,
- Figur 13 und 14: eine weitere Ausführungsform des Starters,
- Figur 15 und 16: die Testvorrichtung gemäß Figur 4 mit einem Starter gemäß Figur 13, 14 und
- Figur 17: eine Testvorrichtung gemäß Figur 4 mit einer nochmals weiteren Ausführungsform eines Starters.

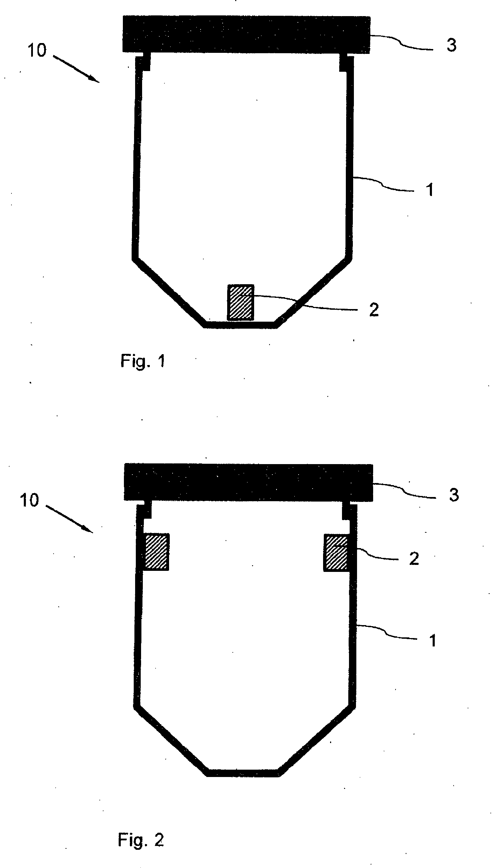

Die Darstellung in Figur 1 zeigt in schematisch vereinfachter Form eine Testvorrichtung 10 als Beispiel für eine Vorrichtung zur visuellen Kontrolle von flüssig-flüssig Vermischungs- oder flüssig-fest Extraktionsreaktionen in einem Mischbehälter 1 mit Hilfe eines porösen Anzeigeelements 2, das einen Farbstoff in trockener Form enthält und durch eine Wandung oder einen Wandabschnitt des Mischbehälters 1 erkennbar ist. Dem Mischbehälter 1 ist ein Deckel 3 zum Öffnen des Mischbehälters 1 sowie zum dichten Verschluss des Mischbehälters 1 zugeordnet.

Bei der in Figur 1 gezeigten Ausführungsform der Testvorrichtung 10 ist das Anzeigeelement 2 frei beweglich im Mischbehälter 1 eingelegt. Bei der in Figur 2 gezeigten Ausführungsform der Testvorrichtung 10 ist das Anzeigeelement 2 wandständig am Mischbehälter 1 angebracht, so dass es durch eine zumindest in diesem Bereich transparente Wandung des Mischbehälters 1 für den Anwender sichtbar und visuell durch den Anwender auswertbar ist.

Das poröse Anzeigeelement 2 ist mit einem Farbstoff imprägniert, der infolge einer mechanischen Agitation einer in dem Mischbehälter 1 befindlichen Flüssigkeit, insbesondere einer Flüssigkeit in Form einer flüssigen Probe oder eines flüssigen Probengemisches, beispielsweise durch Schütteln des Mischbehälters 1 aus dem porösen Anzeigeelement 2 austritt und sich in der Flüssigkeit löst. Die Entfärbungsreaktion des porösen Anzeigeelements 2 ist visuell durch den Anwender erkennbar und definiert das Ende der Vermischungs- bzw. Extraktionsreaktion (Beendigung des Schüttelvorgangs).

Das poröse Anzeigeelement 2 besteht aus einem Material mit vorzugsweise definierten Porendurchmessern und Porenvolumen. Die Porengrößen liegen zwischen 1.000 µm und 1 µm. Als besonders vorteilhaft haben sich Porengrößen zwischen 200 µm und 10 µm herausgestellt. Das poröse Anzeigeelement 2 ist mit einem wasserlöslichen Farbstoff imprägniert, der in dessen Poren verteilt in trockener Form vorliegt.

Bei einer besonderen Ausführungsform der Testvorrichtung 10 ist der Farbstoff in dem porösen Anzeigeelement 2 gleichzeitig ein Reagenz, das nach Lösung in der Flüssigkeit und Vermischung mit einer Analysenprobe zu diagnostischen Zwecken in einer nachfolgenden Nachweisreaktion benötigt wird. Im Falle des Einsatzes von immunchromatographischen Teststreifen kann beispielsweise ein Partikel-Antikörper-Konjugat als Reagenz eingesetzt werden. Bedingt durch die Eigenfärbung des Partikel-Antikörper-Konjugats kann in diesem Fall auch ganz auf den Einsatz weiterer Farbstoffe verzichtet werden.

Die Form des dreidimensionalen porösen Anzeigeelements 2 kann beispielsweise kugel-, quader-, zylinder- oder ringförmig sein. Als Material kommen alle porösen Werkstoffe in Frage, also beispielsweise Faserwerkstoffe wie Polyester oder Zellulose, Schäume oder Sinterwerkstoffe. Als besonders vorteilhaft haben sich gesinterte Materialien, wie beispielsweise Metallsinter oder Kunststoffsinter, herausgestellt. Letztere erlauben die Herstellung einer präzise definierten Gestalt des porösen Anzeigeelements 2 mit definierter Porengröße. Zusätzlich sind gesinterte Elemente weitgehend formstabil und können bei Bedarf durch Presssitz beispielsweise im Mischbehälter 1 fixiert werden, wie dies im unteren Bereich der Darstellung in Figur 1 gezeigt ist. Die Form und die Porengröße des porösen Anzeigeelements 2 sind entscheidend für die korrekte Anzeige der Schüttelzeit und stellen damit Parameter dar, um mit deren Hilfe die Anzeige richtig einzustellen und auf die Verdünnungs- und Extraktionsprozesse abzustimmen. Dabei nimmt die Schüttelzeit mit abnehmender Porengröße und zunehmendem Volumen des porösen Anzeigeelements 2 zu.

Bei einer Verwendung der Testvorrichtung 10 gemäß Figur 1 oder Figur 2 wird nach dem Öffnen des Deckels 3 durch den Anwender eine flüssige oder feste Probe in den Mischbehälter 1 gegeben. Zusätzlich ist auch die Zugabe einer Verdünnungsflüssigkeit in den Mischbehälter 1 möglich, wenn die flüssige Probe verdünnt oder eine feste Probe extrahiert werden soll. Nach dem Schließen des Deckels 3 wird der Mischbehälter 1 durch den Anwender geschüttelt, so dass der Verdünnungs- und/oder Extraktionsprozess stattfinden kann. Gleichzeitig wird der Farbstoff durch den Schüttelvorgang aus dem porösen Anzeigeelement 2 ausgespült. Die Entfärbung des porösen Anzeigeelements 2 kann durch die transparente Wandung des Mischbehälters 1 vom Anwender beobachtet werden. Ein entfärbtes poröses Anzeigeelement 2 zeigt dem Anwender an, dass der Schüttelvorgang beendet werden kann. Die extrahierte bzw. verdünnte Probe kann nunmehr dem Mischbehälter 1 entnommen und einem Analysesystem, beispielsweise einem immunchromatographischen Teststreifen, zugeführt werden.

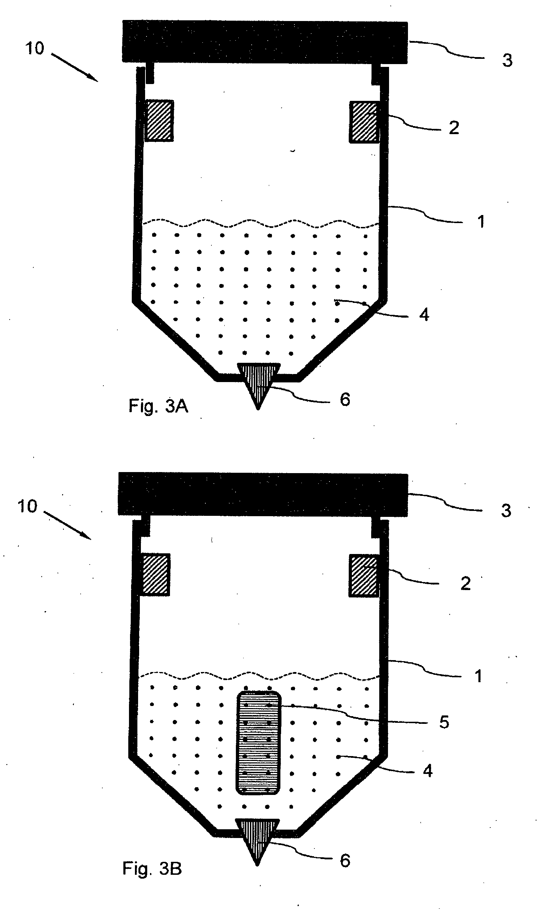

Die beiden Darstellungen in Figur 3A und Figur 3B zeigen eine besondere Ausführungsform der Testvorrichtung 10 gemäß Figur 2. Auch hier ist das poröse Anzeigeelement 2 wandständig am Mischbehälter 1 angebracht. Hierzu eignen sich ringförmige Anzeigeelemente 2, die beispielsweise durch Presssitz an der Wandung des Mischbehälters 1 fixiert sind. Das poröse Anzeigeelement 2 ist innerhalb des Mischbehälters 1 vorzugsweise so positioniert, dass nach dem Einfüllen der flüssigen Probe und/oder der Verdünnungsflüssigkeit 4 (Figur 3A) bzw. nach dem Einfüllen der Verdünnungsflüssigkeit 4 und einer festen Probe 5 (Figur 3B) in der Vorzugslage des Mischbehälters 1 zunächst keine Benetzung des porösen Anzeigeelementes 2 durch die Flüssigkeit 4 stattfindet. Erst durch manuelles Schütteln des Mischbehälters 1 wird das poröse Anzeigeelement 2 mit der Flüssigkeit 4 in Kontakt gebracht und der Farbstoff aus dem Anzeigeelement 2 ausgespült. Die Startpunkte der Farbreaktion im porösen Anzeigeelement 2 und der Verdünnungs- bzw. Extraktionsreaktion werden auf diese Weise synchronisiert, so dass die Richtigkeit der Anzeige sichergestellt ist.

Der Anwender kann die Farbveränderung bedingt durch den wandständigen Kontakt des porösen Anzeigeelements 2 mit dem zumindest in diesem Bereich transparenten Mischbehälter 1 visuell gut verfolgen.

Nach erfolgter Farbreaktion kann das extrahierte oder verdünnte Probengemisch dem Mischbehälter 1 über die Öffnung des Deckels 3 entnommen werden und einem Analysesystem, beispielsweise einem immunchromatographischen Teststreifen, zugeführt werden. Bei einer besonderen Ausführungsform weist der Mischbehälter 1 dafür einen Auslauf 6 auf, der mit dem Analysesystem in fluidischem Kontakt steht oder mit einem solchen in fluidischen Kontakt gebracht werden kann.

Ein besonderer Vorteil der Testvorrichtung 10 und eines bei dessen Verwendung ausgeführten Verfahrens besteht darin, dass Verdünnungs- und Extraktionsreaktionen, die durch manuelles Schütteln erreicht werden, vollständig und präzise ablaufen. Bedingt durch die Funktionalität und Einstellbarkeit des porösen Anzeigeelements 2 sowie die Positionierung im Mischbehälter 1 kann die Anzeige auf die Verdünnungs- bzw. Extraktionsprozesse abgestimmt werden. Die Herstellung und Montage des porösen Anzeigeelements 2 ist als Massenware in Tauch- und Imprägnierprozessen präzise und kostengünstig machbar.

Nachfolgend wird eine erfindungsgemäße Ausführungsform einer Testvorrichtung 10 angegeben. Bei dieser wird die oben beschriebene gezielte Entfärbung eines porösen Anzeigeelements 2 ausgenutzt, um die Bedienungssicherheit durch jederzeitige Erkennbarkeit einer abgeschlossenen oder zumindest ausreichenden Verdünnungs- oder Extraktionsreaktion zu erhöhen.

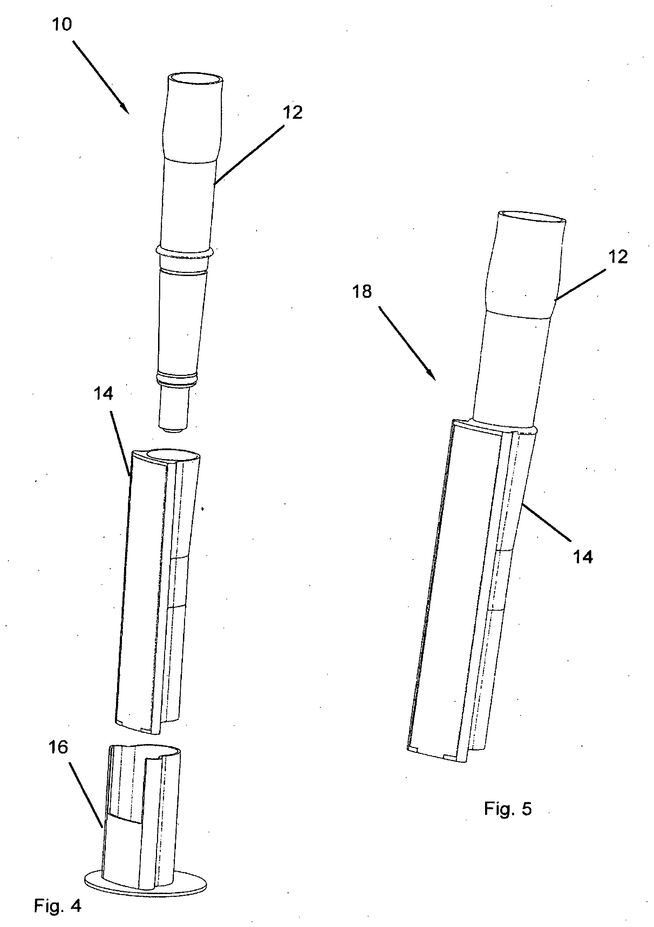

Figur 4 zeigt in einer schematisch vereinfachten Darstellung eine spezielle Ausführungsform einer erfindungsgemäßen Testvorrichtung 10 für biologische Flüssigkeiten, die im Folgenden und nur zur Unterscheidung von der allgemeinen Ausführung der Testvorrichtung 10 in Figur 1 bis Figur 3A, 3B auch als Testkit 10 bezeichnet wird.

Das Testkit 10 umfasst einen Probenehmer 12, einen Extraktor 14 und einen Starter 16. Durch sequentielle Vereinigung dieser drei zueinander geometrisch komplementären Komponenten des Testkits 10 gelingt die eingangs geschilderte gewünschte verbesserte Funktionsintegration, eine Verringerung der Anzahl der im Rahmen eines Testvorgangs erforderlichen Arbeitsschritte sowie eine Verbesserung der Bedienungssicherheit.

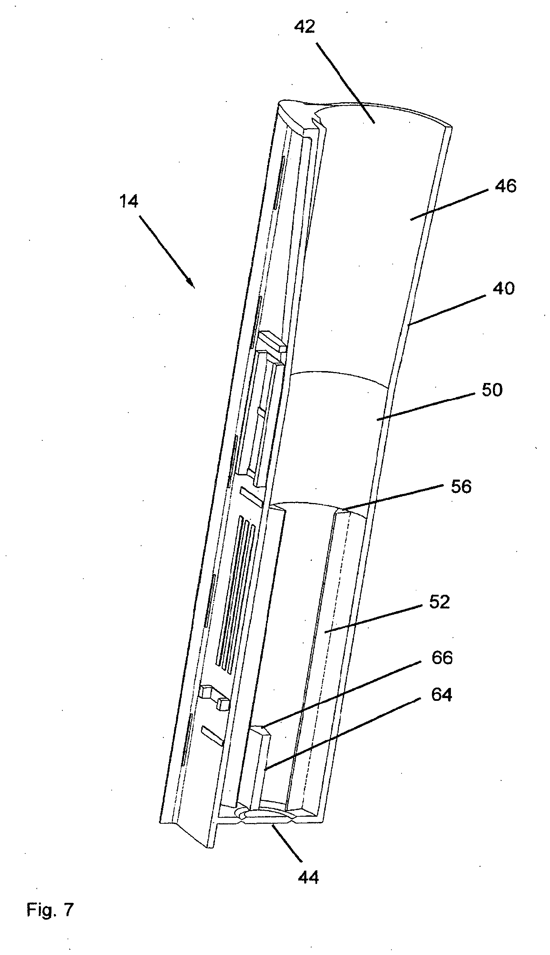

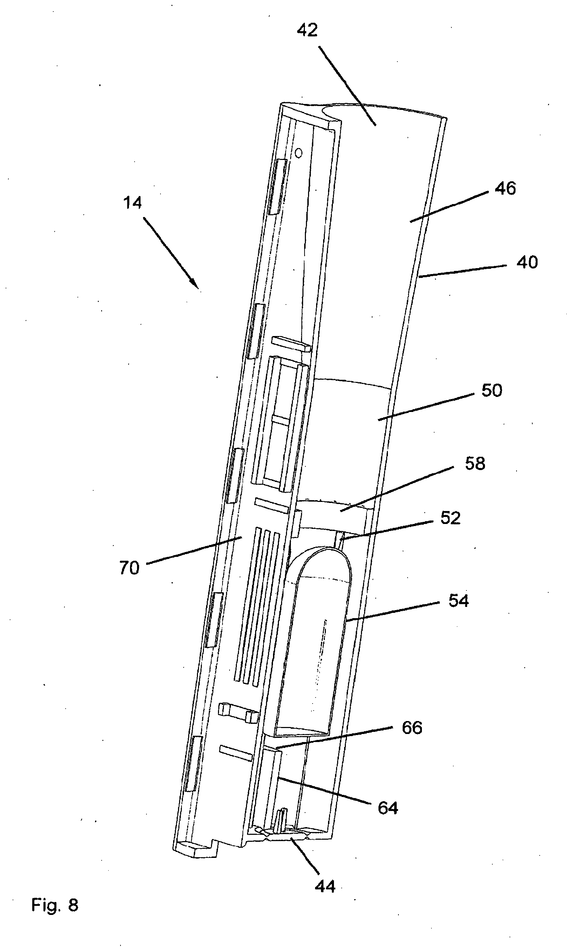

Die Darstellung in Figur 5 zeigt insoweit einen durch Kombination, insbesondere Kombination in Form von Zusammenstecken, des Probenehmers 12 mit dem Extraktor 14 gebildeten, hermetisch abgedichteten neuen Reaktionsraum, der im Folgenden als Schüttelreaktor 18 bezeichnet wird und der funktional dem Mischbehälter 1 der Testvorrichtung 10 entspricht, demnach also ein Beispiel für einen Mischbehälter 1 darstellt. Der Schüttelreaktor 18 und der Starter 16 bilden in der zusammengeführten Konfiguration das aktivierte Testkit 10. Die zentralen Komponenten 12, 14, 16 des Testkits 10 übernehmen dabei sowohl für sich allein genommen Funktionen als auch mehrere kommunizierende (interagierende) Funktionen im Zusammenwirken mit einer jeweils komplementären Komponente. Das Testkit 10 erlaubt das lageunabhängige Zusammenführen einer Originalprobe am Probenehmer 12 mit Trockenreagenzien (Figur 7, Figur 8: Reagenzträger 58, Reagenzträger 60) und initial verkapselten sowie fest deponierten Flüssigreagenzien (Figur 8: Flüssigreagenzdepot 54) in einer im Inneren des Schüttelreaktors 18 gebildeten Kammer. Beim Zusammenführen des Probenehmers 12 mit dem Extraktor 14 entsteht dabei in dieser Kammer ein Überdruck. Das Extrahieren, Ablösen oder Auflösen der Originalprobe von dem Probenehmer 12 und die Vermischung oder Verdünnung der Probe mit Trocken- und/oder Flüssigreagenz durch Schütteln, erfolgt in einem anschließenden manuellen Arbeitsschritt in derselben Kammer. Das Resultat des Schüttelvorgangs wird im Folgenden als Reaktionsgemisch oder kurz als Gemisch bezeichnet. Eine Vollständigkeit des Schüttelvorgangs kann dabei durch eine Farbindikation der eingangs geschilderten Art angezeigt werden.

Nachfolgend werden die einzelnen Komponenten 12, 14, 16 des Testkits 10 im Einzelnen erläutert:

### A. Der Probenehmer 12

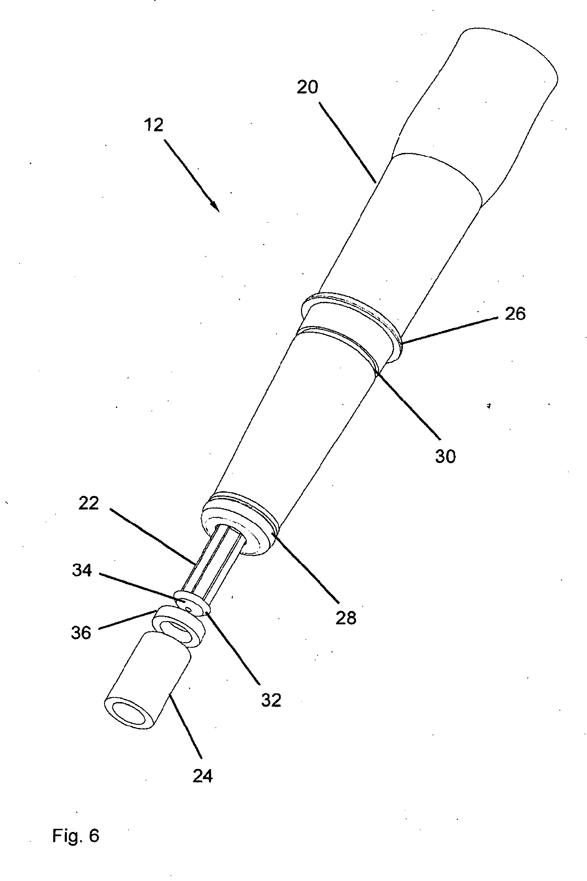

Die Darstellung in Figur 6 zeigt den Probenehmer 12 in vergrößerter Form und mit weiteren Details. Danach ist der Probenehmer 12 an seinem einen Ende als Handgriff 20 und an seinem anderen Ende als Aufnahmestift 22 für einen Probenahmekörper 24 ausgebildet. Bei der gezeigten Ausführungsform umfasst der Probenehmer 12 einen umlaufenden Saum 26, eine kegel- oder kegelstumpfförmige Positionssicherungskontur 32 für einen auf den Aufnahmestift 22 aufgesetzten Probenahmekörper 24, eine umlaufende Dichtlippe 28 sowie eine umlaufende Nut oder Wulst 30 für eine formschlüssige Schnappung in einer korrespondierenden Kontur im Extraktor 14. Darüber hinaus ist die Positionssicherungskontur 32 als Perforationsspitze 34 ausgeführt oder im Anschluss an die Positionssicherungskontur 32 befindet sich eine separate Perforationsspitze 34.

Der Probenehmer 12 fungiert als Träger für einen hülsenförmigen (hohlzylindrischen) Probenahmekörper 24 und optional einen ringförmigen Indikatorring 36. Der Indikatorring 36 kann - wie gezeigt - vor dem Probenahmekörper 24 auf den Aufnahmestift 22 oder im Anschluss an den Probenahmekörper 24 auf den Aufnahmestift 22 aufgesetzt werden. In beiden Fällen steht der Indikatorring 36 in direktem Kontakt zu dem Probenahmekörper 24 und sowohl der Probenahmekörper 24 wie auch der Indikatorring 36 sind mikroporös, dünnwandig, formstabil und hydrophil. Zur Herstellung solcher Probenahmekörper 24 und Indikatorringe 36 kommt speziell die Sinterung von thermoplastischen Partikeln in Betracht. Der Indikatorring 36 ist im ungebrauchten Zustand eingefärbt. Seine Entfärbung erfolgt in Form einer Ausschwemmung des eingelagerten Farbstoffs, zum Beispiel im Mund des Probanden durch den Speichel.

Bei einer besonders Ausführungsform des Probenehmers 12 ist der Probenahmekörper 24 über einen Submillimeterspalt auf dem Aufnahmestift 22 frei drehbar. Die dafür notwendige Präzision der Konturen des Aufnahmestifts 22 und des Probenahmekörpers 24 sowie geeignete Materialverformungseigenschaften für formschlüssige und aneinander gleitende Komponenten sind dem Fachmann bekannt und werden beispielsweise durch gängige Spritzgussverfahren unter Verwendung von thermoplastischen Polymeren erreicht.

### B. Der Extraktor 14

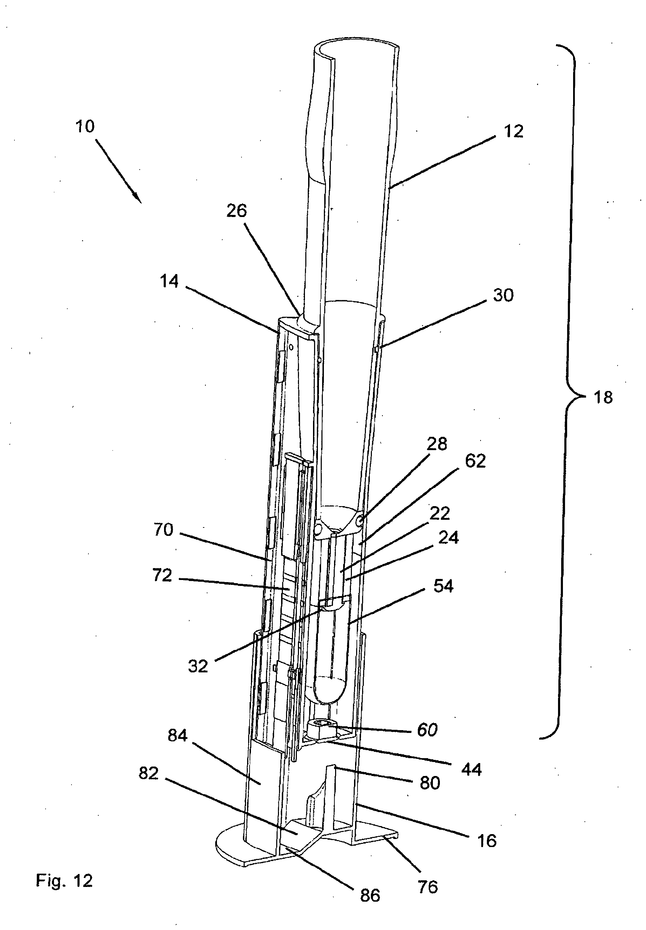

Die Darstellungen in Figur 7 und in Figur 8 zeigen den Extraktor 14 in vergrößerter Form in einem Längsschnitt und mit weiteren Details. Der Extraktor 14 ist allgemein ein langgestreckter Tubus 40 und fungiert als Probenvorbereitungseinheit. Die im Folgenden kurz als Extraktor 14 bezeichnete Probenvorbereitungseinheit weist an ihrer Oberseite eine Öffnung 42 zur Aufnahme des Probenehmers 12 sowie an ihrer Unterseite eine zunächst verschlossene Schnittstelle 44 zur Kombination mit dem Starter 16 auf. Probenehmer 12 und Extraktor 14 bilden im Verbund den Schüttelreaktor 18 (Figur 5) und im Inneren des Schüttelreaktors 18 eine hermetisch geschlossene Kammer. In diese Kammer erfolgt das Abziehen einer flüssigen Probe vom Probenehmer 12, nämlich vom Probenahmekörper 24 des Probenehmers 12, oder die Ab- und Auflösung von partikelförmigen Substanzen vom Probenahmekörper 24 mit Hilfe eines Schüttelvorgangs. Der Schüttelreaktor 18 kann anschließend mittels des Starters 16 geöffnet werden, damit das jeweilige Reaktionsgemisch austreten und einem nicht separat gezeigten, an sich bekannten Teststreifen 72 (Figur 12) zugeführt werden kann.

Der einseitig offene Tubus 40 des Extraktors 14 ist an seiner offenen Seite als Einführbereich 46 für den Probenehmer 12 ausgeführt. Hier weist der Tubus 40 auf seiner Innenoberfläche glatte Wandungen sowie (hier nicht gezeigte) schnappende oder rastende Konturen zur formschlüssigen und arretierten Aufnahme des Probenehmers 12 auf, zum Beispiel durch Eingriff in dessen Nut 30 (Figur 6). Etwa in der Mitte des Extraktors 14 befindet sich eine streng zylindrische Druckaufbauzone 50. Der Durchmesser der Druckaufbauzone 50 korrespondiert mit dem Durchmesser der Dichtlippe 28 (Figur 6) des Probenehmers 12. In diesem Bereich gleitet die Dichtlippe 28 des Probenehmers 12 über die Innenoberfläche der Druckaufbauzone 50, um einerseits Dichtigkeit und anderseits einen definierten Überdruck im Schüttelreaktor 18 zu erzeugen. Der Überdruck resultiert aus dem komprimierten Luftvolumen beim Zusammenschieben von Probenehmer 12 und Extraktor 14. Die maximale Höhe des Überdrucks ist durch die Längserstreckung der Druckaufbauzone 50 definiert.

Im Bodenbereich weist der Extraktor 14 die bereits erwähnte und auch als Sollbruchstelle fungierende Schnittstelle 44 zur Kombination mit dem Starter 16 auf, die nur im Zusammenwirken mit dem Starter 16 durchstoßen werden kann. Der Boden des Extraktors 14 ist im unverletzten Zustand flüssigkeitsdicht und in bestimmten Grenzen überdruckresistent.

An der Tubuswand 40 befinden sich Halterippen 52 für die elastische Klemmung eines optionalen Flüssigreagenzdepots 54 (Figur 8). Die Halterippen 52 erlauben einerseits die Fixierung des Flüssigreagenzdepots 54, erheben sich aber andererseits nicht so weit über die Innenoberfläche der Tubuswand 40, dass das Einführen des Probenahmekörpers 24 behindert würde. Die Halterippen 52 bilden optional in Richtung auf die obere Öffnung 42 eine Auflagefläche 56 für Reagenzträger 58 (Figur 8) und/oder Prozessindikatoren. Die Auflagefläche 56 kann auch in anderer Form, zum Beispiel in Form einer Stufe in der Innenkontur der Tubuswand 40, gebildet sein.

Auf dem Boden des Extraktors 14 kann sich optional ein zusätzlicher oder alternativer Reagenzträger 60 (Figur 12) befinden, insbesondere ein als Trockenreagenzdepot fungierender mikroporöser Reagenzträger, der vorzugsweise aus gesintertem Kunststoff besteht. Die in Figur 8 und Figur 12 gezeigten Reagenzträger 58, 60 geben mögliche Positionen solcher Reagenzträger 58, 60 wieder. Grundsätzlich können sich ein oder mehrere Reagenzträger auch an anderen Orten im Inneren des Schüttelreaktors 18 befinden, zum Beispiel auch in Form loserer Reagenzträger 58, 60, wie dies in Figur 1 für das dortige lose Anzeigeelement 2 gezeigt ist.

Der oder jeder Reagenzträger 58, 60 wird beim Schütteln des Schüttelreaktors 18 im Zuge des Schüttelvorgangs zunächst benetzt und anschließend wird allmählich das jeweilige Reagenz durch weiteres Schütteln gelöst. Die Anordnung eines Reagenzträgers 58, 60 oberhalb und/oder unterhalb des in den Extraktor 14 eingeführten Probenahmekörpers 24 garantiert, dass die beim Schütteln resultierende Umspülung und Benetzung gleichermaßen den Probenahmekörper 24 und den oder jeden Reagenzträger 58, 60 betrifft, so dass eine Entfärbung des oder jedes Reagenzträgers 58, 60 auch eine ausreichende Ablösung der Probe vom Probenahmekörper 24 anzeigt.

Ein umlaufender Spalt 62 (Figur 12) zwischen Probenahmekörper 24 und Tubuswand 40 entscheidet über die Extraktionseffizienz durch Schütteln bei Verwendung geringer Flüssigreagenzvolumina (Flüssigreagenzmenge im Flüssigreagenzdepot 54) zwischen 0,2 und 0,6 ml. Das Verhältnis von Flüssigreagenzvolumen zum Volumen des Reaktionsgemisches beträgt typischerweise zwischen 1,5:1 und 3:1. Als besonders günstig im Sinne einer verkürzten Schütteldauer zur vollständigen Mischung der Probe haben sich umlaufende Spalte 62 mit einer Weite von 0,5 mm bis 3,0 mm herausgestellt.

Der oder jeder Reagenzträger 58, 60 liegt bei einer besonderen Ausführungsform des Testkits 10 als Sinterkörper vor, wobei das Trägermaterial mikroporös ist. Bei einem farbigen Trockenreagenz fungiert auch der oder jeder Reagenzträger 58, 60 als Schüttelindikator und mit abnehmenden Porengrößen das Trägermaterials lässt sich der Prozess des Herauslösens eines farbigen Trockenreagenzes bei Bedarf gezielt verlangsamen, um die vollständige Vermischung der Probe mit dem Reagenz während der Entfärbung des Schüttelindikators zu garantieren. Damit entspricht auch der oder jeder Reagenzträger 58, 60 des Testkits 10 funktional dem Anzeigeelement 2 der Testvorrichtung 10 und ist ein Beispiel für ein solches Anzeigeelement 2. Bei einer besonderen Ausführungsform des Testkits 10 ist der Indikatorfarbstoff des jeweiligen Reagenzträgers 58, 60 gleichzeitig ein Farbreagenz mit Reporterfunktion im Rahmen eines Immunoassays auf Drogensubstanzen.

Der Vorgang des manuellen Schüttelns des Schüttelreaktors 18 endet mit der vollständigen Entfärbung der Indikatorkomponente des Schüttelindikators des oder jedes Reagenzträgers 58, 60. Das Indikatoransprechverhalten bei einem oberhalb des Probenahmekörpers 24 befindlichen Reagenzträger 58 verhält sich proportional zur Schüttelintensität und Schüttelfrequenz in vertikaler Orientierung und ist deshalb abhängig vom Schüttelmodus des individuellen Anwenders. Der Zeitpunkt der Entfärbung stellt sicher, dass die Probe im Probenahmekörper 24 ebenfalls vollständig mit dem Flüssigreagenz und dem Trockenreagenz vermischt ist. Die Ausgestaltung des Extraktors 14 mit einem transparenten Kunststoff gewährleistet die leichte Erkennbarkeit der Entfärbung des Schüttelindikators. Der eine transparente Wandung oder eine abschnittsweise transparente Wandung aufweisende Extraktor 14 entspricht demnach insoweit funktional dem durchsichtigen oder abschnittsweise durchsichtigen Mischbehälter 1 der Testvorrichtung 10.

Die Halterippen 52 schließen einen gedachten Zylinder ein, der einen geringeren Durchmesser als ein zu haltendes Flüssigreagenzdepot 54 und einen im Vergleich zum Durchmesser des Probenahmekörpers 24 größeren Durchmesser hat. Vom Boden des Extraktors 14 ragen Knackrippen 64 empor, deren Stirnflächen 66 als Anschlag/Auflagefläche für ein Flüssigreagenzdepot 54 fungieren. Die Knackrippen 64 schließen entsprechend einen gedachten Zylinder mit einem im Vergleich zu dem von den Halterippen 52 eingeschlossenen gedachten Zylinder geringeren Durchmesser ein.

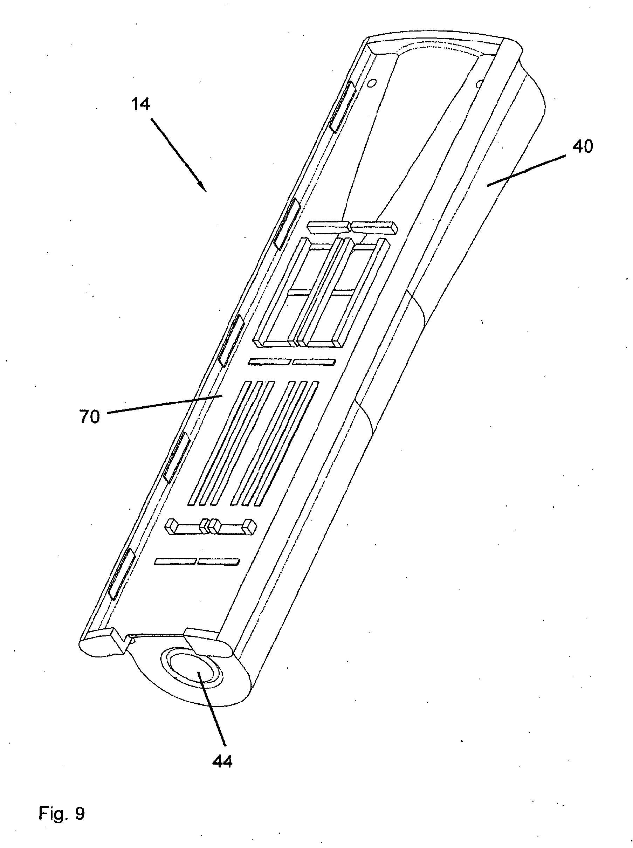

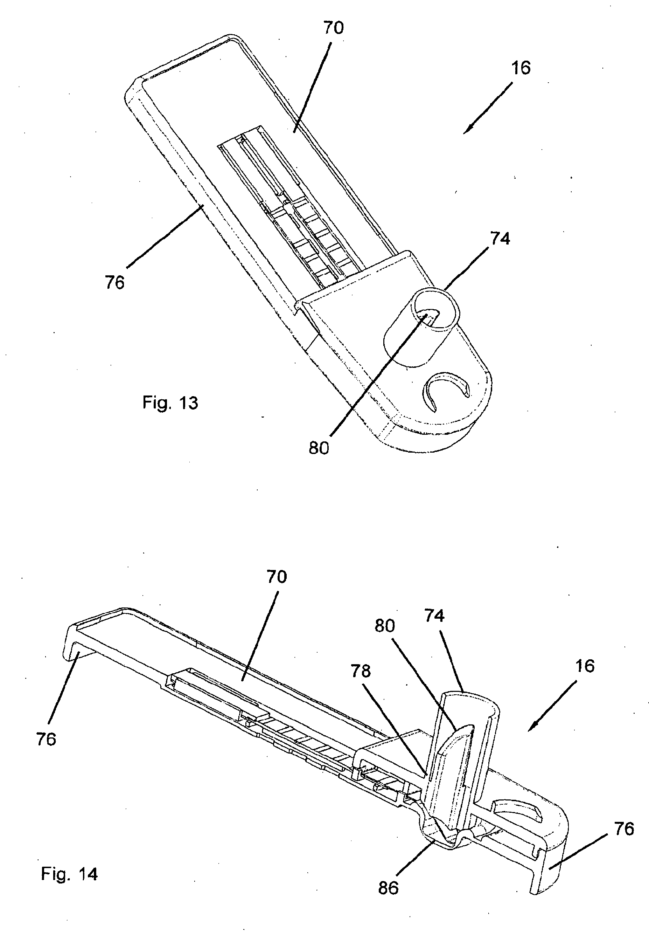

Optional befindet sich auf der Außenseite des Extraktors 14 eine Teststreifenplattform 70, die zur Aufnahme immunchromatographischer Teststreifen 72 bestimmt ist. Dazu zeigt die Darstellung in Figur 9 den Extraktor 14 gemäß Figur 7 und Figur 8 aus einer anderen Perspektive. Die Teststreifenplattform 70 zur Fixierung von immunchromatographischen Teststreifen 72 ist entweder ein räumlich vom Inneren des Tubus 40 isolierter Bestandteil des Extraktors 14 mit vertikaler Orientierung oder (siehe Figur 13, Figur 14) ein dem Starter 16 zugeordnetes Element mit horizontaler oder vertikaler Orientierung. Jedenfalls gelangt das jeweilige Reaktionsgemisch zu der Teststreifenplattform 70, wenn der Schüttelreaktor 18 nach Abschluss des Schüttelvorgangs mittels des Starters 16 geöffnet wird und dabei das Reaktionsgemisch aus dem Schüttelreaktor 18 austritt.

### C. Der Starter 16

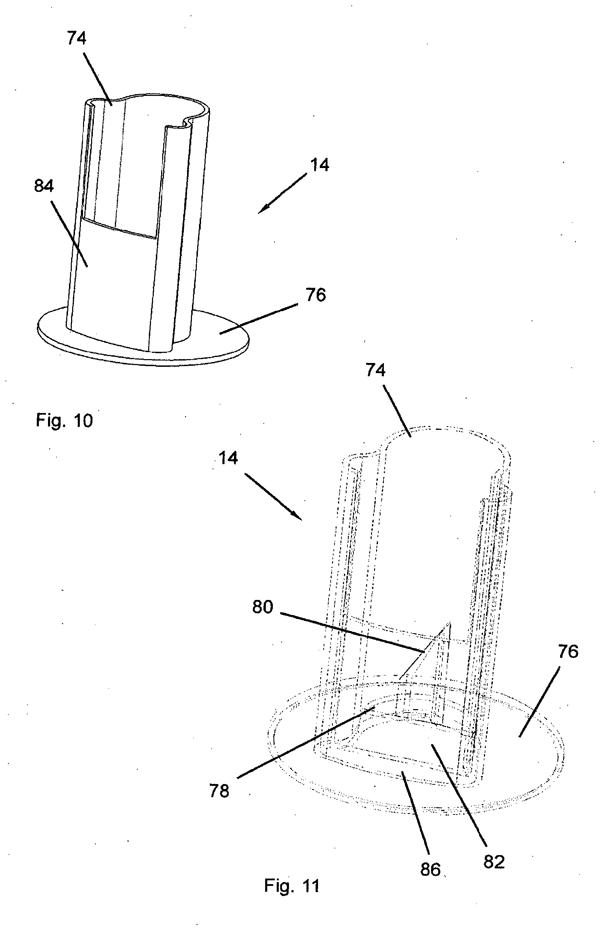

Die Darstellungen in Figur 10 und Figur 11 zeigen eine im Folgenden und nur zur Unterscheidung als Standardkonfiguration bezeichnete Ausführungsform des Starters 16 in perspektivischer Ansicht bzw. in Form eines (vergrößerten) Drahtgittermodells. Die Standardkonfiguration des Starters 16 vereint ein oben offenes, zur Aufnahme und Führung eines unteren Bereichs des Extraktors 14 vorgesehenes Leitprofil 74 und einen Standfuß 76 für die vertikale Ausrichtung des aufzunehmenden Schüttelreaktors 18 auf einem ebenen Untergrund. Die Innenkontur des Starters 16 und das Leitprofil 74 sind derart ausgestaltet, dass der Extraktor 14 im Starter 16 eine einseitig geführte nach unten gerichtete Bewegung ausführen kann, während eine nach oben gerichtete Bewegung über Barriere-Konturen, zum Beispiel ähnlich der umlaufenden Nut oder Wulst 30 am Probenehmer 12, optional erschwert wird.

In einem Bodenbereich des Starters 16 ist ein Anschlag für die Unterseite des Extraktors 14 gebildet und dort erhebt sich ein Penetrationsprofil 80, das unter Krafteinwirkung in die Sollbruchstelle 44 des Schüttelreaktors 18 eindringt, um diese und die im Schüttelreaktor 18 gebildete Kammer zu öffnen. Der Fluidtransfer des in der Kammer befindlichen Reaktionsgemisches zur Teststreifenplattform 70 wird durch den bei der Zusammenführung von Probenehmer 12 und Extraktor 14 erzielten Überdruck gewährleistet. Unterhalb des Anschlags 78 bilden ein Ablauf 82 (siehe auch Figur 12), der Standfuß 76 und eine Frontwand 84 des Starters 16 ein Auffangbecken 86 für das aus dem Schüttelreaktor 18 austretende Reaktionsgemisch. In dieses fließt das Reaktionsgemisch in einer auf einer Abstellfläche aufgesetzten Vorzugslage des Testkits 10 und gesichert durch den Überdruck im Schüttelreaktor 18 ab. In das Auffangbecken 86 taucht zumindest ein immunchromatographischer Teststreifen 72 ein, der das Reaktionsgemisch kapillaraktiv aufsaugt und einer immunchemischen Reporterreaktion zuführt.

Die Darstellung in Figur 12 zeigt das Testkit 10 mit dem in den Starter 16 eingeführten Schüttelextraktor 18. Das Reaktionsgemisch gelangt aufgrund des im Schüttelextraktor 18 herrschenden Überdrucks aus dem Auffangbecken 86 zu der Teststreifenpfattform 70 am Extraktor 14 und dem oder jedem dort angebrachten Teststreifen 72.

Die Darstellungen in Figur 13 und Figur 14 zeigen in einer perspektivischen bzw. längsgeschnittenen Ansicht eine weitere Ausführungsform des Starters 16, bei der dieser eine Teststreifenplattform 70 für Teststreifen 72 aufweist. Bei dieser Ausführungsform gelangt das Reaktionsgemisch aufgrund des im Schüttelreaktor 18 herrschenden Überdrucks aus dem Auffangbecken 86 (Figur 14) zur Teststreifenplattform 70 des Starters 16 und dem oder jedem dort angebrachten, horizontal gelagerten Teststreifen 72.

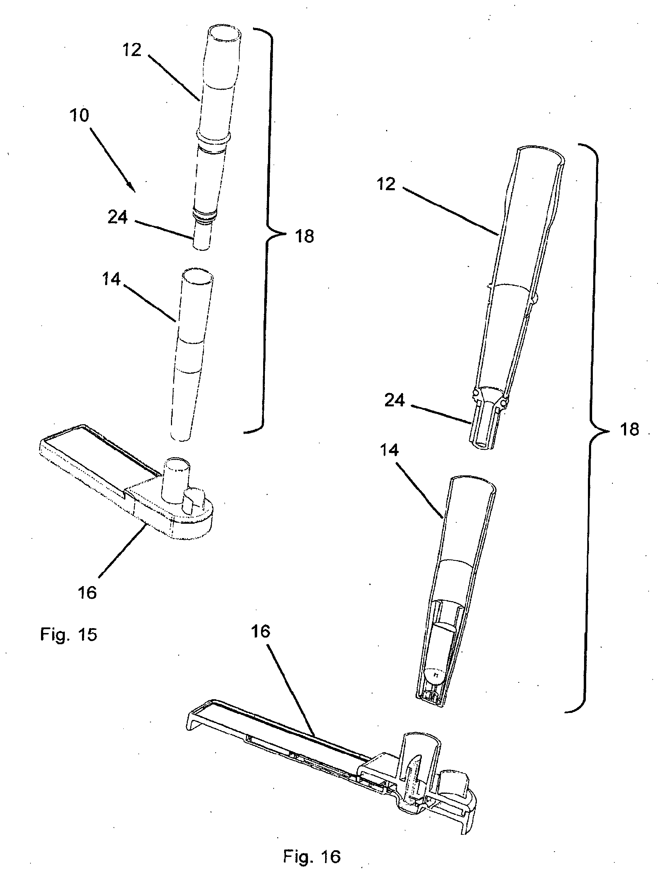

Die Darstellungen in Figur 15 und Figur 16 zeigen in einer perspektivischen bzw. längsgeschnittenen Ansicht das Testkit 10 vordem Zusammenfügen von Probenehmer 12 und Extraktor 14 zum Schüttelreaktor 18 und vor dem Einführen des Schüttelreaktors 18 in den Starter 16, wobei das Zusammenfügen von Probenehmer 12 und Extraktor 14 auch erfolgen kann, wenn der Extraktor 14 bereits in den Starter 16 eingeführt ist. Um die Übersicht über die Darstellungen nicht unnötig zu erschweren, ist auf eine Wiederholung einzelner Bezugsziffern verzichtet worden. Insofern wird auf die vorangehenden Figuren verwiesen.

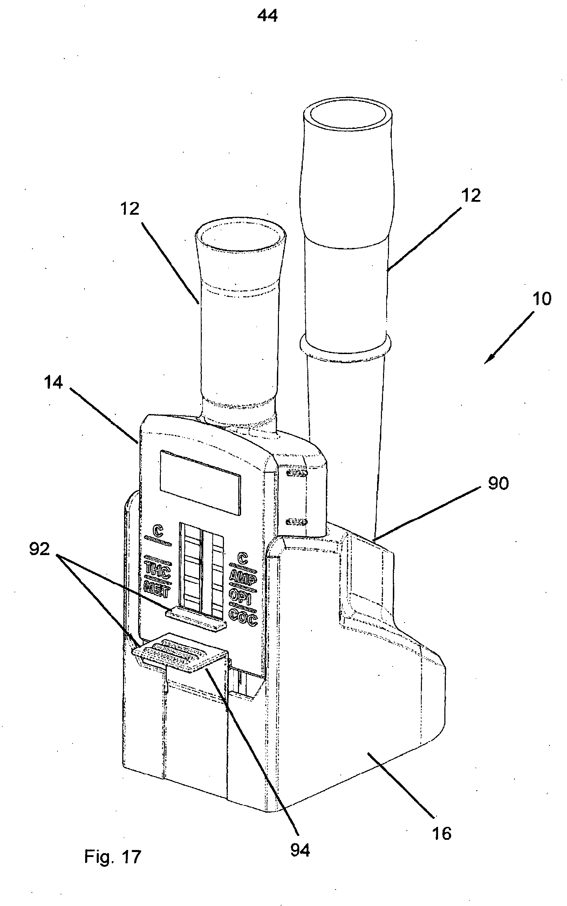

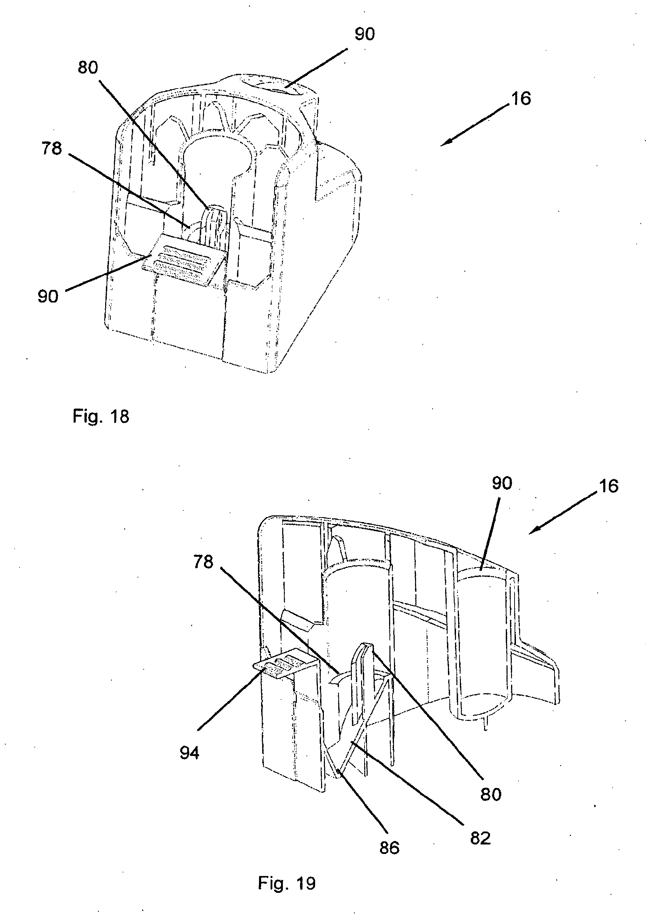

Die Darstellung in Figur 17 zeigt das Testkit 10 mit einer weiteren Ausführungsform des Starters 16. Die Darstellungen in Figur 18 und Figur 19 zeigen den Starter 16 aus Figur 17 in unterschiedlichen Ansichten und teilweise geschnitten. Danach kann dieser eine Hygienetasche 90 in Form eines Sacklochs zur Aufbewahrung des Probenehmers 12 aufweisen. Die Hygienetasche 90 ist passend dimensioniert, so dass ein vor seiner Benutzung dort eingesetzter Probenehmer 12 rundum vor Umwelteinflüssen geschützt ist. Die Dichtlippe 28 des Probenehmers 12 isoliert den Probenehmer 12 innerhalb der Hygienetasche 90.

Zusätzlich oder alternativ zur Hygienetasche 90 kann der Starter 16 eine Frühstartsicherung 92 in Form einer entfernbaren Lasche 94 oder dergleichen aufweisen. Diese ist bei der dargestellten Ausführungsform als greifbarer und beweglicher Vorsprung, welcher zum Beispiel über ein dünnes Filmscharnier an den Starter 16 angebunden ist, ausgestaltet. Eine solche Frühstartsicherung 92 oder eine ähnliche physikalische Sperre bildet einen Anschlag für den Extraktor 14, wenn dieser sich im Verbund mit dem Starter 16 befindet und der Probenehmer 12 mit dem Extraktor 14 unter Krafteinwirkung zusammengeführt wird. Durch die Frühstartsicherung 92 wird dabei das versehentliche Öffnen des Extraktors 14 durch den Starter 16 verhindert. Erst wenn die Lasche 94 manuell entfernt, also zum Beispiel abgeknickt wird, kann der Schüttelreaktor 18 bis zum Anschlag 78 in den Starter 16 gedrückt werden.

Bei einer Verwendung des Probenehmers 12 zur Aufnahme einer Speichelprobe wird der Probenehmer 12 vom Probanden in den Mund geführt und anschließend in der Mundhöhle an verschiedene Positionen gebracht, zum Beispiel die Backentaschen oder in den Bereich der Zunge. Der mit dem Probenehmer 12 gesammelte Speichel befindet sich danach aufgrund des Oberflächenkontakts mit der Mundschleimhaut auf der Oberfläche oder in den Poren des kapillaraktiven Probenahmekörpers 24. Eine vollständige oder ausreichende Füllung des Probenahmekörpers 24 wird dabei durch den Indikatorring 36 mit vollständiger Entfärbung oder Ausschwemmung des eingelagerten lebensmitteltauglichen Farbstoffs angezeigt.

Bei einer Verwendung des Probenehmers 12 zur Aufnahme feinster Feststoffpartikel oder Staubpartikel erfolgt die Probenahme durch Aufdrücken oder Abrollen des Probenahmekörpers 24 auf einem Gegenstand oder einer Oberfläche. Die Oberfläche kann dabei trocken oder feucht sein. Die freie Drehbarkeit des Probenahmekörpers 24 über dem Aufnahmestift 22 des Probenehmers 12 erleichtert dabei die Anhaftung oder Absorption von Partikeln im Zuge einer rotierenden Bewegung. Eine solche Probenahme kommt zum Beispiel für die forensische Erfassung von Drogen in ihrer Handelsform in Betracht. Dabei werden zum Beispiel Kleidungsstücke oder Gegenstände untersucht, die mit den Drogen in Berührung gekommen sein könnten, indem sie mit dem Probenahmekörper 24 abgerieben werden oder der Probenahmekörper 24 des Probenehmers 12 auf dem Objekt abgerollt wird.

### D. Probenvorbereitung am Beispiel einer Speichelprobe

Zur Auswertung einer Speichelprobe wird der Probenehmer 12 im Anschluss an die Probenahme per Hand in den Extraktor 14 eingeführt. Der Vorgang des Zusammensteckens dieser beiden Komponenten 12, 14 erfolgt lageunabhängig unter manuellem Kraftaufwand. Die Handhabung des Extraktors 14 kann dabei unabhängig vom Starter 16 oder in einer Konfiguration einer gehaltenen Verbindung mit dem Starter 16 erfolgen. Das offene Tubusende 42 des Extraktors 14 und der am Probenehmer 12 umlaufende Saum 26 fungieren dabei beim Einführen des Probenehmers 12 als Anschlag für den Probenehmer 12. Der Probenehmer 12 dichtet über die ringförmig umlaufende Dichtlippe 28 den als Druckaufbauzone 50 fungierenden zylindrischen Bereich des Extraktors 14 ab. In eine Rastkontur des Probenehmers 12 in Form von oder nach Art der umlaufenden Nut 30 schnappt formschlüssig eine hier nicht gezeigte korrespondierende Schnappkontur des Extraktors 14 ein und fungiert dabei als Verschlusssicherung. Bei diesem ersten Handhabungsschritt der Probenvorbereitung in Form des Einführens des Probenehmers 12 in den Extraktor 14 entsteht der räumlich abgegrenzte Schüttelreaktor 18. Im gleichen Arbeitsschritt wird ein Flüssigreagenzdepot 54, zum Beispiel ein Flüssigreagenzdepot 54 in Form einer mit Flüssigreagenz gefüllten Glasampulle, durch Perforation mit Hilfe der Perforationsspitze 34 des Probenehmers 12 zerstörend geöffnet.

Ein nachfolgender, zweiter Handhabungsschritt umfasst das Schütteln des Schüttelreaktors 18, insbesondere ein Schütteln des Schüttelreaktors 18 in Richtung seiner Längsachse. Erst durch diese Agitation kommt es zur Vermischung der mit dem Probenehmer 12 gesammelten und auf der Oberfläche oder in den Poren des kapillaraktiven Probenahmekörpers 24 befindlichen Speichelprobe mit Trocken- und/oder Flüssigreagenzien. Die Speichelprobe sowie das in dem oder jedem Reagenzträger 58, 60 enthaltene Reagenz, zum Beispiel drogenspezifische Antikörper-Nanogoldkonjugate, gelangen im Zuge der Schüttelbewegung immer wieder in Kontakt mit dem Flüssigreagenz des Flüssigreagenzdepots 54. Bei einer als Flüssigreagenzdepot 54 fungierenden Glasampulle werden kleine Glassplitter, also Glassplitter, die kleiner als der Spalt 62 zwischen dem Probenahmekörper 24 und der gegenüberliegenden Innenoberfläche der Tubuswand 40 sind, durch ihr größeres spezifisches Eigengewicht im Zuge der Schüttelbewegung stärker vertikal beschleunigt als die Flüssigkeit. Die an ihnen haftende Flüssigkeit erleichtert den vertikalen Transfer im Schüttelreaktor 18. Dabei kommt es zum allmählichen Abziehen der Probe (Extraktion) und des Trockenreagenzes durch wiederholte Flüssigfilmbildung auf dem Probenahmekörper 24 sowie dem oder jedem Reagenzträger 58, 60 gefolgt von Tropfenabriss. Der Schüttelvorgang dauert so lange, bis sich entweder der farbige Reagenzträger 58, 60 entfärbt hat oder eine vorgegebene Schüttelzeit erreicht ist. Um aber die Unschärfe der Umsetzung eines Schüttelvorgangs durch verschiedene Individuen zu vermeiden, ist vorgesehen, dass die Entfärbung des oder jedes Reagenzträgers 58, 60 als Indikator für einen ausreichenden Schüttelvorgang fungiert und dadurch interindividuelle Unterschiede beim Schütteln kompensiert werden können.

Die Probenvorbereitung endet mit dem Abschluss des beschriebenen Schüttelvorgangs und einer optional anschließenden Inkubationsphase, während derer der Schüttelreaktor 18 für eine bestimmte Zeit in einer Ruheposition verbleibt, bevor der Fluidtransfer zu einem oder mehreren Teststreifen 72 ausgelöst wird. Wenn sich der Schüttelreaktor 18 während des Schüttelvorgangs nicht bereits im Starter 16 befindet, wird er jetzt in den Starter 16 eingesetzt. Jedenfalls wird der Schüttelreaktor 18 nach dem Abschluss des Schüttelvorgangs bis zum Anschlag 78 in den Starter 16 durchgedrückt, wobei der Starter 16 dazu auf einer Oberfläche aufgestellt ist. Gegebenenfalls erfolgt vor dem Durchdrücken des Schüttelreaktors 18 in den Starter 16 ein Abbiegen, Abreißen oder sonstiges Entfernen der Lasche 94, die beim Zusammenführen von Probenehmer 12 und Extraktor 14 im Starter 16 das Eindringen des Penetrationsprofils 80 in die Sollbruchstelle 44 verhindert hat. Mit dem Durchdrücken Schüttelreaktors 18 in den Starter 16 öffnet das Penetrationsprofil 80 die Sollbruchstelle 44 am Boden des Extraktors 14 und das im Schüttelreaktor 18 befindliche Reaktionsgemisch tritt unter plötzlichem Druckverlust nach unten aus. Bei diesem dritten Arbeitsschritt passiert der Übergang des Reaktionsgemisches, bestehend aus einer homogenen Mischung aus Speichel, Flüssigreagenz und Antikörper-Nanogoldkonjugat, auf die Teststreifenplattform 70. Ein dort befindlicher Teststreifen 72 saugt oder mehrere dort befindliche Teststreifen 72 saugen das Gemisch aus dem Auffangbecken 86 bedingt durch Kapillarkräfte autonom auf.

Nachdem das Gemisch innerhalb weniger Minuten über die Teststreifen 72 gelaufen ist, haben sich in Abhängigkeit von der Analytkonzentration und einer damit einhergehenden immunchemischen Abfangreaktion farblich sichtbare Testlinien entwickelt, die im Rahmen einer visuellen Interpretation ausgewertet werden können.

### BEZUGSZEICHENLISTE

- 1: Mischbehälter
- 2: Anzeigeelement
- 3: Deckel
- 4: flüssige Probe und/oder Verdünnungsflüssigkeit
- 5: feste Probe
- 6: Auslauf
- 10: Testvorrichtung / Testkit
- 12: Probenehmer
- 14: Extraktor
- 16: Starter
- 18: Schüttelreaktor (Mischbehälter)
- 20: Handgriff
- 22: Aufnahmestift
- 24: Probenahmekörper
- 26: umlaufender Saum
- 28: umlaufende Dichtlippe
- 30: umlaufende Nut oder Wulst
- 32: Positionssicherungskontur
- 34: Perforationsspitze
- 36: Indikatorring
- 40: Tubus / Tubuswand
- 42: obere Öffnung des Extraktors / Tubusende
- 44: als Sollbruchstelle fungierende Schnittstelle am Boden des Extraktors
- 46: Einführbereich (für den Probenehmer)
- 48: ---
- 50: Druckaufbauzone
- 52: Halterippe
- 54: Flüssigreagenzdepot
- 56: Auflagefläche
- 58: Reagenzträger
- 60: Reagenzträger
- 62: umlaufender Spalt
- 64: Knackrippe
- 66: Stirnfläche (einer Knackrippe)
- 68: ---
- 70: Teststreifenplattform
- 72: Teststreifen
- 74: Leitprofil (im Starter; zur Aufnahme des Extraktors)
- 76: Standfuß (des Starters)
- 78: Anschlag (im Starter)
- 80: Penetrationsprofil
- 82: Ablauf
- 84: Frontwand (des Starters)
- 86: Auffangbecken
- 88: ---
- 90: Hygienetasche
- 92: Frühstartsicherung
- 94: Lasche (der Frühstartsicherung)

## Patentansprüche

1. Testvorrichtung (10) mit einem Probenehmer (12), einer Probenvorbereitungseinheit (14) und einem Starter (16), wobei der Probenehmer (12) mit der Probenvorbereitungseinheit (14) und die Probenvorbereitungseinheit (14) mit dem Starter (16) kombinierbar ist, wobei die Probenvorbereitungseinheit (14) an ihrer Oberseite eine Öffnung (42) zur Aufnahme des Probenehmers (12) sowie an ihrer Unterseite eine zunächst verschlossene Schnittstelle (44) zur Kombination mit dem Starter (16) aufweist, wobei durch Kombination des Probenehmers (12) mit der Probenvorbereitungseinheit (14) ein als Schüttelreaktor (18) fungierender, dichter Mischbehälter (1, 18) entsteht, wobei die Schnittstelle (44) als Sollbruchstelle (44) des Schüttelreaktors (18) fungiert, wobei der Probenehmer (12) an einem Ende einen Probenahmekörper (24) aufweist, wobei der Starter (16) in einem Bodenbereich ein Penetrationsprofil (80) aufweist, wobei der Probenehmer (12) mit dem Probenahmekörper (24) in einen Tubus (40) der Probenvorbereitungseinheit (14) einführbar ist, wobei beim Einführen des Probenehmers (12) in die Probenvorbereitungseinheit (14) im Inneren des Schüttelreaktors (18) ein Überdruck entsteht,
wobei der Mischbehälter (1, 18) eine transparente oder abschnittsweise transparente Wandung aufweist, wobei sich im Inneren des Mischbehälters (1, 18) ein von außerhalb des Mischbehälters (1, 18) sichtbar angeordnetes und als Schüttelindikator fungierendes Anzeigeelement (2, 58) befindet,
wobei das Anzeigeelement (2, 58) Poren mit einer Porengröße von 1 µm bis 1.000 µm aufweist und mit einem wasserlöslichen Farbstoff imprägniert ist, der in diesen Poren in trockener Form vorliegt und
wobei sich das Anzeigeelement (2, 58) bei einem durch Schütteln des Mischbehälters (1, 18) vermittelten Kontakt mit einer in den Mischbehälter (1, 18) der Testvorrichtung (10) einfüllbaren flüssigen Probe (4) entfärbt, wobei das Penetrationsprofil (80) des Starters (16) beim Kombinieren der Probenvorbereitungseinheit (14) mit dem Starter (16) in die Sollbruchstelle (44) des Schüttelreaktors (18) eindringt und dafür bestimmt ist, beim Einführen der Probenvorbereitungseinheit (14) in den Starter (16) den Boden der Probenvorbereitungseinheit (14) zu öffnen und wobei bei geöffneter Sollbruchstelle (44) und aufgrund des Überdrucks im Schüttelreaktor (18) ein Fluidtransfer aus dem Schüttelreaktor (18) zu einer Teststreifenplattform (70) an der Probenvorbereitungseinheit (14) oder am Starter (16) erfolgt.

2. Testvorrichtung (10) nach Anspruch 1, wobei der Überdruck im Inneren des Schüttelreaktors (18) entsteht, indem die Probenvorbereitungseinheit (14) einen Abschnitt mit einer zylindrischen Druckaufbauzone (50) und der Probenehmer (12) eine umlaufende Dichtlippe (28) aufweist, die beim Einführen des Probenehmers (12) in die Probenvorbereitungseinheit (14) an der Innenoberfläche der Druckaufbauzone (50) zur Anlage kommt.

3. Testvorrichtung (10) nach einem der Ansprüche 1 oder 2, mit einer Frühstartsicherung (92) an der Probenvorbereitungseinheit (14) und am Starter (16).

4. Testvorrichtung (10) nach einem der Ansprüche 1 bis 3, mit Halterippen (52) zur Fixierung eines Flüssigreagenzdepots (54) im Inneren der Probenvorbereitungseinheit (14).

5. Testvorrichtung (10) nach einem der Ansprüche 1 bis 4, mit einer im Starter (16) gebildeten und zur Aufbewahrung des Probenehmers (12) bestimmten Hygienetasche (90) in Form eines Sacklochs.

6. Verfahren zur Verwendung einer Testvorrichtung (10) nach einem der vorangehenden Ansprüche, wobei der Mischbehälter (1, 18) mit einer in den Mischbehälter (1, 18) gegebenen Probe (4, 5) bis zur Entfärbung eines im Mischbehälter (1, 18) befindlichen Anzeigeelements (2, 58) geschüttelt wird.

7. Verfahren nach Anspruch 6 zur Verwendung einer Testvorrichtung (10) nach einem der Ansprüche 1 bis 5, wobei mit dem Probenehmer (12) eine Probe genommen wird und der Probenehmer (12) anschließend mit der Probenvorbereitungseinheit (14) kombiniert wird, so dass Probenehmer (12) und Probenvorbereitungseinheit (14) einen Schüttelreaktor (18) bilden, wobei der Schüttelreaktor (18) bis zur Entfärbung des Anzeigeelements (2, 58) geschüttelt wird und ein resultierendes Probengemisch aufgrund eines beim Zusammenfügen von Probenehmer (12) und Probenvorbereitungseinheit (14) erzeugten Überdrucks aus dem Schüttelreaktor (18) abfließt.

## Claims

1. Testing device (10) comprising a sampler (12), a sample preparation unit (14) and a starter (16),
wherein the sampler (12) can be combined with the sample preparation unit (14) and the sample preparation unit (14) can be combined with the starter (16),
wherein the sample preparation unit (14) has on its upper side an opening (42) for receiving the sampler (12) and on its underside an initially closed interface (44) for the combination with the starter (16),
wherein, by the combination of the sampler (12) with the sample preparation unit (14), a sealed mixing container (1, 18), acting as a shaking reactor (18), is created,
wherein the interface (44) acts as a predetermined breaking point (44) of the shaking reactor (18),
wherein the sampler (12) has at one end a sampling body (24),
wherein the starter (16) has in a bottom region a penetration profile (80),
wherein the sampler (12) can be inserted with the sampling body (24) into a tube (40) of the sample preparation unit (14),
wherein, when the sampler (12) is inserted into the sample preparation unit (14), a positive pressure is created in the interior of the shaking reactor (18),
wherein the mixing container (1, 18) has a transparent or in some portions transparent wall,
wherein there is in the interior of the mixing container (1, 18) an indicating element (2, 58), which is arranged so as to be visible from outside the mixing container (1, 18) and acts as a shaking indicator,
wherein the indicating element (2, 58) has pores with a pore size of 1 µm to 1000 µm and is impregnated with a water-soluble dye, which is in a dry form in these pores, and
wherein the indicating element (2, 58) is discoloured when there is contact, imparted by shaking the mixing container (1, 18), with a liquid sample (4) that can be filled into the mixing container (1, 18) of the testing device (10),
wherein the penetration profile (80) of the starter (16) penetrates at the predetermined breaking point (44) of the shaking reactor (18) when the sample preparation unit (14) is combined with the starter (16) and
is intended to open the bottom of the sample preparation unit (14) when the sample preparation unit (14) is inserted into the starter (16) and
wherein a fluid transfer from the shaking reactor (18) to a test strip platform (70) on the sample preparation unit (14) or on the starter (16) takes place when the predetermined breaking point (44) is opened and as a result of the positive pressure in the shaking reactor (18).

2. Testing device (10) according to Claim 1, wherein the positive pressure is created in the interior of the shaking reactor (18) by the sample preparation unit (14) having a portion with a cylindrical pressure buildup zone (50) and the sampler (12) having a peripheral sealing lip (28), which comes to lie against the inner surface of the pressure buildup zone (50) when the sampler (12) is inserted into the sample preparation unit (14).

3. Testing device (10) according to either of Claims 1 and 2, with an early starting preventer (92) on the sample preparation unit (14) and on the starter (16).

4. Testing device (10) according to one of Claims 1 to 3, with retaining ribs (52) for fixing a liquid reagent depot (54) in the interior of the sample preparation unit (14) .

5. Testing device (10) according to one of Claims 1 to 4, with a hygienic pocket (90), in the form of a blind hole, formed in the starter (16) and intended for storing the sampler (12).

6. Method for using a testing device (10) according to one of the preceding claims, wherein the mixing container (1, 18), with a sample (4, 5) introduced into the mixing container (1, 18), is shaken until there is discolouration of an indicating element (2, 58) located in the mixing container (1, 18).

7. Method according to Claim 6 for using a testing device (10) according to one of Claims 1 to 5, wherein the sampler (12) is used for taking a sample and the sampler (12) is subsequently combined with the sample preparation unit (14), so that the sampler (12) and the sample preparation unit (14) form a shaking reactor (18), wherein the shaking reactor (18) is shaken until there is discolouration of the indicating element (2, 58), and a resultant sample mixture flows off out of the shaking reactor (18) as a result of a positive pressure generated when the sampler (12) and the sample preparation unit (14) are joined together.

## Revendications

1. Dispositif de test (10) comprenant un échantillonneur (12), une unité de préparation d'échantillons (14) et un amorceur (16),
dans lequel l'échantillonneur (12) peut être combiné avec l'unité de préparation d'échantillons (14) et l'unité de préparation d'échantillons (14) peut être combinée avec l'amorceur (16),
dans lequel l'unité de préparation d'échantillons (14) présente, au niveau de son côté supérieur, une ouverture (42) pour recevoir l'échantillonneur (12) et, au niveau de son côté inférieur, une interface (44) préalablement fermée en vue de la combinaison avec l'amorceur (16),
dans lequel, par combinaison de l'échantillonneur (12) avec l'unité de préparation d'échantillons (14), on obtient un récipient de mélange hermétique (1, 18) servant de réacteur à secousses (18),
dans lequel l'interface (44) sert de zone de rupture (44) du réacteur à secousses (18),
dans lequel l'échantillonneur (12) présente à une extrémité un corps de prélèvement d'échantillons (24),
dans lequel l'amorceur (16) présente, dans une région de fond, un profilé de pénétration (80),
dans lequel l'échantillonneur (12) peut être introduit avec le corps de prélèvement d'échantillons (24) dans un tube (40) de l'unité de préparation d'échantillons (14),
dans lequel, lors de l'introduction de l'échantillonneur (12) dans l'unité de préparation d'échantillons (14), il se crée une surpression à l'intérieur du réacteur à secousses (18),
dans lequel le récipient de mélange (1, 18) présente une paroi transparente ou transparente dans certaines parties,
dans lequel un élément indicateur (2, 58) disposé de manière visible depuis l'extérieur du récipient de mélange (1, 18) et servant d'indicateur de secousses se trouve à l'intérieur du récipient de mélange (1, 18),
dans lequel l'élément indicateur (2, 58) présente des pores ayant une taille de pores de 1 µm à 1000 µm et est imprégné d'une teinture hydrosoluble qui se présente sous forme sèche dans ces pores et
dans lequel l'élément indicateur (2, 58) se décolore en cas de contact obtenu par secouement du récipient de mélange (1, 18) avec un échantillon (4) liquide pouvant être introduit dans le récipient de mélange (1, 18) du dispositif de test (10),
dans lequel le profilé de pénétration (80) de l'amorceur (16), lors de la combinaison de l'unité de préparation d'échantillons (14) avec l'amorceur (16), pénètre dans la zone de rupture (44) du réacteur à secousses (18) et
est prévu pour ouvrir le fond de l'unité de préparation d'échantillons (14) lors de l'introduction de l'unité de préparation d'échantillons (14) dans l'amorceur (16) et
dans lequel, lorsque la zone de rupture (44) est ouverte et sous l'effet de la surpression dans le réacteur à secousses (18), il se produit un transfert de fluide hors du réacteur à secousses (18) jusqu'à une plate-forme de bandelettes de test (70) au niveau de l'unité de préparation d'échantillons (14) ou au niveau de l'amorceur (16) .

2. Dispositif de test (10) selon la revendication 1, dans lequel la surpression à l'intérieur du réacteur à secousses (18) se produit par le fait que l'unité de préparation d'échantillons (14) présente une portion ayant une zone cylindrique d'augmentation de pression (50) et l'échantillonneur (12) présente une lèvre d'étanchéité périphérique (28) qui, lors de l'introduction de l'échantillonneur (12) dans l'unité de préparation d'échantillons (14), vient en appui contre la surface intérieure de la zone d'augmentation de pression (50).

3. Dispositif de test (10) selon l'une quelconque des revendications 1 et 2, comprenant une protection contre un lancement prématuré (92) au niveau de l'unité de préparation d'échantillons (14) et au niveau de l'amorceur (16).

4. Dispositif de test (10) selon l'une quelconque des revendications 1 à 3, comprenant des nervures de retenue (52) pour la fixation d'un dépôt de réactif fluide (54) à l'intérieur de l'unité de préparation d'échantillons (14).

5. Dispositif de test (10) selon l'une quelconque des revendications 1 à 4, comprenant une pochette hygiénique (90) sous la forme d'un trou borgne, formée dans l'amorceur (16) et prévue pour stocker l'échantillonneur (12).

6. Procédé d'utilisation d'un dispositif de test (10) selon l'une quelconque des revendications précédentes, dans lequel le récipient de mélange (1, 18) est secoué avec un échantillon (4, 5) ajouté dans le récipient de mélange (1, 18) jusqu'à la décoloration d'un élément indicateur (2, 58) se trouvant dans le récipient de mélange (1, 18).

7. Procédé selon la revendication 6 pour l'utilisation d'un dispositif de test (10) selon l'une quelconque des revendications 1 à 5, dans lequel un échantillon est prélevé avec l'échantillonneur (12) et l'échantillonneur (12) est ensuite combiné avec l'unité de préparation d'échantillons (14) de telle sorte que l'échantillonneur (12) et l'unité de préparation d'échantillons (14) forment un réacteur à secousses (18), le réacteur à secousses (18) étant secoué jusqu'à la décoloration de l'élément indicateur (2, 58) et un mélange d'échantillon résultant s'écoulant sous l'effet de la surpression générée lors de l'assemblage de l'échantillonneur (12) et de l'unité de préparation d'échantillons (14) hors du réacteur à secousses (18).
